(19) **Europäisches Patentamt**

**European Patent Office**

**Office européen des brevets**

(11) Veröffentlichungsnummer: **0 291 733 B1**

## (12) EUROPÄISCHE PATENTSCHRIFT

(45) Veröffentlichungstag der Patentschrift: **18.09.91**

(51) Int. Cl.⁵: **A61C 5/06**

(21) Anmeldenummer: **88106688.0**

(22) Anmeldetag: **26.04.88**

(54) **Schüttlergabel für Dental-Mischkapseln.**

(30) Priorität: **14.05.87 DE 8706965 U**

(43) Veröffentlichungstag der Anmeldung:
**23.11.88 Patentblatt 88/47**

(45) Bekanntmachung des Hinweises auf die
Patenterteilung:
**18.09.91 Patentblatt 91/38**

(84) Benannte Vertragsstaaten:
**AT CH DE FR GB IT LI**

(56) Entgegenhaltungen:
**DE-B- 2 630 376**
**GB-A- 2 172 059**
**US-A- 1 377 680**
**US-A- 3 749 371**

(73) Patentinhaber: **THERA Patent GmbH & Co. KG**
**Gesellschaft für industrielle Schutzrechte**
**Griesberg 2**
**W-8031 Seefeld 1(DE)**

(72) Erfinder: **Herold, Wolf-Dietrich**
**Höhenweg 13**
**W-8031 Seefeld 2(DE)**

(74) Vertreter: **Strehl, Schübel-Hopf, Groening**
**Maximilianstrasse 54 Postfach 22 14 55**
**W-8000 München 22(DE)**

EP 0 291 733 B1

## Beschreibung

Im Dentalbereich werden Mischkapseln verwendet, in denen vordosierte Materialien (meistens eine pulverförmige und eine flüssige Komponente) zur Herstellung eines gebrauchsfertigen Zementes oder Füllmaterials, etwa eines Kunststoffs oder eines Amalgams, mit Hilfe eines elektrisch angetriebenen Schüttlers intensiv vermischt werden.

Bei einem derartigen Schüttler, wie er aus US-A-3,749,371 bekannt ist, wird die Mischkapsel zwischen die federnden Arme einer Haltegabel eingespannt und in oszillierende Bewegungen versetzt. Die dabei auftretenden Massenbeschleunigungswerte liegen bei über 100 g (g = Erdbeschleunigung). Bei der Bewegungsumkehr ergeben sich entsprechend hohe Materialbeanspruchungen der Haltegabel. Der Massenbeschleunigung überlagern sich ferner Impulskräfte des innerhalb der Kapsel hinund herbewegten Materials, die vor allem bei den verhältnismäßig schweren Silberamalgamen hohe Werte erreichen können. Aus diesem Grund bestehen übliche Gabeln aus hochwertigem Federstahl. Trotzdem kommt es vor, daß die beim Mischvorgang auftretenden Beanspruchungen zum Bruch der Gabel führen. Um zu vermeiden, daß die Kapsel dann mit hoher Geschwindigkeit geschoßartig durch den Raum fliegt, sind neuere Schüttler mit einer den Schwingraum umgebenden Abdeckhaube versehen.

Übliche Mischkapseln haben je nach Hersteller und in Abhängigkeit von der Art und Menge der zu vermischenden Substanzen unterschiedliche Längen, die im Bereich von etwa 25 bis 35 mm liegen. Um einen sicheren Halt während des Schüttelvorgangs zu gewährleisten, müssen die Arme der Haltegabel mit großer Kraft gegen die Kapselenden drücken. Die Forderung, auch die kürzeste Mischkapsel sicher zu halten, führt dazu, daß zum Einsetzen einer längeren Kapsel die Arme der Gabel gegen die Federspannung weit auseinandergebogen werden müssen. In der Praxis läßt sich feststellen, daß sehr kurze Kapseln nicht gehalten werden können und sehr lange Kapseln zur Beschädigung der elastischen Gabel führen. Außerdem läßt beim häufigen Einsetzen längerer Kapseln die Elastizität der Haltegabel nach, so daß insbesondere kürzere Kapseln zunehmend schlechter gehalten werden.

Die Forderung nach elastischen Gabeln bedeutet ferner zwangsläufig, daß entsprechend große Kräfte aufgebracht werden müssen, um beim Einsetzen und Entnehmen einer Kapsel die Arme der Gabel auseinander zu bewegen. Diese manuell durchzuführende Tätigkeit ist bei Helferinnen wenig beliebt, da das Aufspannen der Gabelarme mit den Fingerspitzen schmerzhaft sein kann und leicht zu einem Abbrechen der Fingernägel führt.

Eine dritte Schwierigkeit bekannter Schüttlergabeln besteht darin, daß die Halterung der Mischkapsel zwischen den Gabelenden im wesentlichen kraftschlüssig erfolgt. Um eine sichere Halterung zu gewährleisten, sollten die Kapselenden und die Einspannstellen der Gabelarme geometrisch aufeinander abgestimmt sein. Schon wegen des unterschiedlich starken Aufweitens zur Aufnahme unterschiedlich langer Kapseln ändern sich jedoch die geometrischen Verhältnisse. Außerdem bedingen unterschiedliche Funktionen der Kapseln entsprechend verschiedene Gestaltungen der Kapselenden. So gibt es neben reinen Mischkapseln auch Applikationskapseln, die am einen Ende mit einem Kolben verschlossen sind und am anderen Ende eine Ausbringdüse aufweisen, somit an beiden Einspannstellen anders geformt sind als reine Mischkapseln. Auch aus diesen Gründen führt der bei den bekannten Haltegabeln praktisch ausschließlich vorhandene Kraftschluß zwischen Kapsel und Gabelenden zu einer begrenzten Sicherheit der Halterung.

Aus US-A-1,377,680 ist eine Schüttlergabel für Dental-Mischkapseln gemäß dem ersten Teil des Anspruchs 1 bekannt. Der dort vorgesehene Stift dient zur gegenseitigen Führung der die Kapsel haltenden Gabelarme und durchsetzt eine diese Arme gegeneinander vorspannende Feder. Auch hier sind die obigen Probleme nicht gelöst. So werden unterschiedlich dimensionierte Kapseln die Feder unterschiedlich stark auslenken und infolgedessen die jeweilige Kapsel mehr oder weniger sicher halten.

Der Erfindung liegt die generelle Aufgabe zugrunde, eine Schüttlergabel der eingangs bezeichneten Gattung anzugegen, die bei einfachem Aufbau einerseits die Mischkapsel während des Schüttelvorgangs sicher hält, andererseits ein müheloses Einsetzen und Entnehmen der Kapsel gestattet.

Die erfindungsgemäße Lösung dieser Aufgabe ist im Kennzeichenteil des Anspruchs 1 angegeben. Bei der danach gestalteten Schüttlergabel kann die Federkraft gering sein, so daß sich die beiden Gabelarme zum Einsetzen und Entnehmen der Kapsel mühelos auseinanderbewegen lassen; sie muß nur ausreichen, um die beiden Gabelarme nach Eingriff an den beiden Kapselenden gegeneinander zu verkippen, wobei sich der am einen Arm vorgesehene Stift in der im anderen Arm vorgesehenen Öffnung verkantet. Die Kapsel wird dann nach dem Prinzip der Selbsthemmung oder -klemmung gehalten. Die während des Schüttelvorgangs auftretenden Beschleunigungskräfte bewirken dabei, daß das Kippmoment vergrößert und dadurch der Selbsthemmungseffekt verstärkt wird.

Die Weiterbildungen der Erfindung nach den Ansprüchen 2 bis 4 führen zu einer weiteren Erhöhung in der Sicherheit der Halterung. In der Ausgestaltung nach Anspruch 5 ergibt sich eine einfach herzustellende Vorrichtung. Die Maßnahme des Anspruchs 6 führt zu einer glatten Form ohne herausragende Teile. Die Gestaltung nach Anspruch 7 ist insofern von Vorteil, als die Selbsthemmung beim manuellen Öffnen der Gabel zwangsläufig aufgehoben wird. Die Weiterbildung der Erfindung nach Anspruch 8 ist zweckmäßig, da sich die beiden Arme der Gabel auch dann gegeneinander fixieren, wenn keine Kapsel eingesetzt ist, so daß bei einem Betrieb des Schüttlers in diesem Zustand keine unzulässigen Beanspruchungen an der Gabel auftreten können. Die Gestaltung nach Anspruch 9 ist vom Standpunkt einer formschlüssigen Halterung von Kapseln mit unterschiedlich gestalteten Enden günstig.

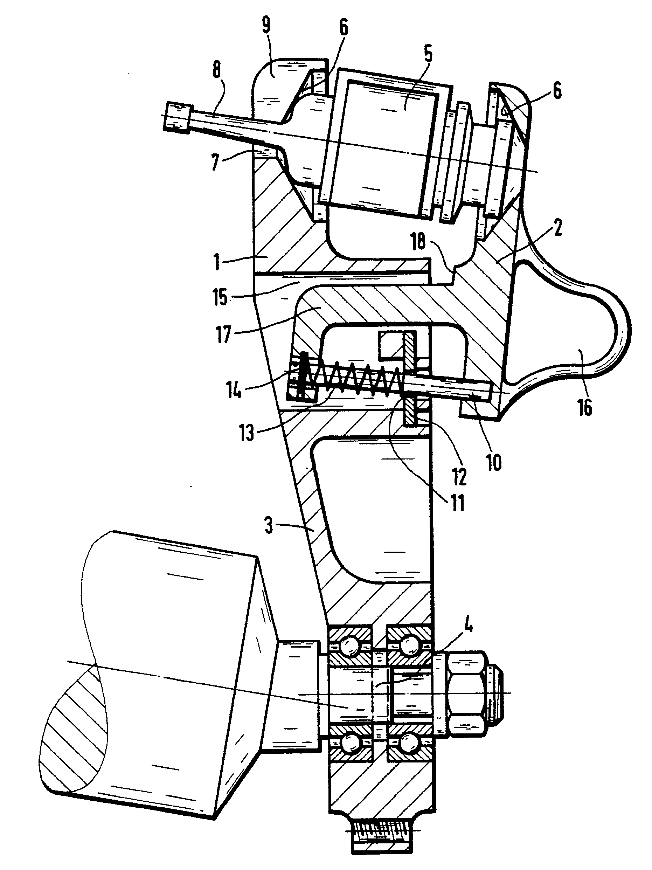

Ein bevorzugtes Ausführungsbeispiel der Erfindung wird nachstehend anhand der Zeichnung näher erläutert, die einen Längsschnitt durch eine Schüttlergabel mit eingesetzter Mischkapsel zeigt.

Gemäß der Zeichnung besteht die Gabel aus zwei als getrennte Bauteile gefertigten Armen 1, 2, wobei der in der Zeichnung linke Arm 1 mit einem unteren Fortsatz 3 über ein Wälzlager auf der Abtriebswelle eines Elektromotors gelagert ist. Das Wälzlager sitzt dabei auf einem zur Drehachse geneigten Teil 4 der Abtriebswelle, und der Arm 1 ist - beispielsweise durch (nicht gezeigte) Federn - gegen Mitdrehen gesichert, so daß die Drehbewegung der Abtriebswelle ähnlich wie bei einem Taumelscheibengetriebe in eine Hin- und Herbewegung der Gabel umgewandelt wird, bei der die zwischen den Armen 1 und 2 eingespannte Kapsel 5 in der Zeichnung nach rechts und links bewegt wird.

Zur Aufnahme der Kapsel 5 sind die oberen Enden der Arme 1, 2 an den einander zugewandten Flächen mit konischen Vertiefungen 6 versehen. Dadurch ergibt sich eine formschlüssige Halterung der Kapsel 5. Ferner ist die Vertiefung 6 in mindestens einem der beiden Arme 1, 2 mit einem zentrischen Durchbruch 7 versehen, durch den eine Ausbringdüse 8, wie sie bei Applikationskapseln vorhanden ist, hindurchgesteckt werden kann. Zum leichteren Einsetzen und Entnehmen der Kapsel 5 mit der Ausbringdüse 8 weist ferner das obere Ende dieses Arms einen mit dem Durchbruch 7 in Verbindung stehenden vertikalen Schlitz 9 auf.

In den Arm 2 ist gemäß der Zeichnung unterhalb der Einspannstelle für die Kapsel 5 ein Stift 10 eingesetzt, der im wesentlichen parallel zur Einspannrichtung der Kapsel 5 verläuft und eine Öffnung 11 in einer in den anderen Arm 1 eingesetzten Scheibe 12 durchsetzt. Auf den Stift 10 ist eine Schraubenfeder 13 aufgeschoben, die sich einerseits an der vom Arm 2 abgewandten Fläche der Scheibe 12 und andererseits an einem Haltering 14 abstützt, über den das Ende des Stifts 10 an einem gabelartigen Ansatz 17 des Arm 2 gehalten ist.

Die Scheibe 12 befindet sich im Bodenbereich einer im Arm 1 vorgesehen Aussparung 15, die so bemessen ist, daß sie den Ansatz 17 des Arms 2 und den Stift 10 mit der Feder 13 auch dann aufnimmt, wenn keine Kapsel eingespannt ist. An den Arm 2 ist ferner an der vom Arm 1 abgewandten Außenfläche ein Griffelement 16 an einer Stelle angeformt, die gegenüber der Kapsel-Einspannstelle versetzt im Bereich der Befestigungsstelle des Stifts 10 liegt. Bei den Armen 1 und 2 handelt es sich um starre Formteile.

In der in der Zeichnung gezeigten Stellung, bei der zwischen die Vertiefungen 6 in den beiden Armen 1, 2 eine Kapsel 5 eingesetzt ist, erzeugt die Kraft der Schraubenfeder 13 ein Kippmoment des Arms 2 um die Einspannstelle der Kapsel 5 in der Vertiefung 6 des Arms 1 oder auch des Arms 2. Dieses Kippmoment bewirkt, daß der Arm 2 sich schräg stellt und damit der in den Arm 2 fest eingefügte Stift 10 sich in der dargestellten Weise gegenüber der Öffnung 11 in der Scheibe 12 verkantet. Um die dabei auftretende Klemmwirkung möglichst groß zu machen, ist die Dicke der Scheibe 12 wesentlich kleiner, beispielsweise nur halb so groß, wie der Durchmesser des Stifts 10, und die Öffnung 11 ist scharfkantig ausgebildet. Ferner besteht die Scheibe 12 aus gegenüber dem Stift 10 härterem Material, vorzugsweise aus gehärtetem Stahl.

In der gezeigten, verkanteten Stellung läßt sich die Gabel durch an den Einspannstellen der Kapsel 5 angreifende Kräfte nicht öffnen. Wird beim beim Schüttelvorgang die Gabel gemäß der Zeichnung nach links beschleunigt, so drückt die Kapsel 5 auf den Arm 2 und erhöht dadurch das Kippmoment und damit die Klemmwirkung. Beschleunigt die Gabel nach rechts, so wird der Arm 2 ohnehin nach links gedrückt, so daß sich die Gabel ebenfalls nicht öffnet.

Zum Einsetzen bzw. Entnehmen der Kapsel 5 bei Stillstand des Schüttlers läßt sich dagegen der Arm 2 durch Erfassen an dem Griffelement 16 gegen die Vorspannung der Feder 13 nach rechts ziehen. Dabei wird ein Drehmoment erzeugt, das dem von der Feder 13 um die Kapsel-Einpannstelle verursachten Kippmoment entgegenwirkt und die Verkantung zwischen Stift 10 und Öffnung 11 aufgehebt, so daß der Stift 10 nun mühelos in der etwas größer bemessenen Öffnung 11 gleitet. Die Feder 13 kann verhältnismäßig schwach sein, da sie lediglich das genannte Kippmoment zu erzeugen hat. Durch Ergreifen des Griffelements 16 läßt sich so die Gabel von Hand ohne großen Kraftaufwand öffnen.

Wird das Griffelement 16 losgelassen, ohne daß eine Kapsel eingesetzt worden ist, so schließt sich die Gabel durch die Kraft der Feder 13 so weit, bis ein an der Innenseite des Arms 2 angeformter Vorsprung 18 an der gegenüberliegenden Innenfläche des Arms 1 anstößt. Da auch der Vorsprung 18 gegenüber dem Stift 10 in Richtung der Kapsel-Einspannstelle seitlich versetzt ist, erzeugt die Feder 13 ein Kippmoment, das zu einem Verkanten und damit zu der beschriebenen Selbsthemmung zwischen dem Stift 10 und der Öffnung 11 führt. Die Gabel bleibt daher auch dann sicher geschlossen, wenn der Rüttler ohne eingespannte Kapsel in Bewegung gesetzt wird, so daß auch in diesem Fall keine losen Teile vorhanden sind, an denen unzulässige Beschleunigungskräfte auftreten könnten.

**Patentansprüche**

1. Schüttlergabel für Dental-Mischkapseln mit zwei Armen (1, 2) zum federnden Einspannen einer Kapsel (5), wobei

   der eine Arm (2) mit einem Stift (10) versehen ist, der im wesentlichen parallel zur Kapsel-Einspannrichtung verläuft und eine im anderen Arm (1) vorgesehene Öffnung (11) durchsetzt,

   dadurch gekennzeichnet, daß Stift (10) und Öffnung (11) so dimensioniert sind, daß sich der Stift (10) aufgrund eines von der Federkraft um die Einspannstelle der Kapsel (5) erzeugten Kippmoments in der Öffnung (11) verkantet.

2. Schüttlergabel nach Anspruch 1, dadurch gekennzeichnet, daß der zwischen der Einspannstelle der Kapsel (5) und dem Stift (10) bzw. der Öffnung (11) gelegene Bereich jedes Arms (1, 2) im wesentlichen starr ist.

3. Schüttlergabel nach Anspruch 1 oder 2, dadurch gekennzeichnet, daß die Öffnung (11) in einer in den anderen Arm (1) eingesetzten Scheibe (12) aus relativ zu dem Stift (10) härterem Material ausgebildet und scharfkantig ist.

4. Schüttlergabel nach Anspruch 3, dadurch gekennzeichnet, daß die Dicke der Scheibe (12) wesentlich geringer ist als der Durchmesser des Stifts (10).

5. Schüttlergabel nach einem der Ansprüche 1 bis 4, dadurch gekennzeichnet, daß die Federkraft aus einer Schraubenfeder (13) stammt, die auf dem Stift (10) zwischen einer an dessen freiem Ende vorgesehenen Halterung (14) und der vom einen Arm (2) abgewandten Seite der Öffnung (11) angeordnet ist.

6. Schüttlergabel nach Anspruch 5, dadurch gekennzeichnet, daß Stift (10) und Feder (13) in einer im anderen Arm (1) vorgesehenen Aussparung (15) untergebracht sind.

7. Schüttlergabel nach einem der Ansprüche 1 bis 6, dadurch gekennzeichnet, daß der eine Arm (2) an seiner vom anderen Arm (1) abgewandten Außenseite ein Griffelement (16) trägt, an dem sich durch Erfassen ein dem Kippmoment entgegenwirkendes Drehmoment ausüben läßt, und daß der andere Arm (1) einen Fortsatz (3) zur Verbindung mit dem Schüttlerantrieb aufweist.

8. Schüttlergabel nach einem der Ansprüche 1 bis 7, gekennzeichnet durch derartige Gestaltung der beiden Arme (1, 2), daß sie bei Abwesenheit einer Kapsel an einer Stelle (18) einander berühren, die in Richtung der Kapsel-Einspannstelle seitlich vom Stift versetzt ist.

9. Schüttlergabel nach einem der Ansprüche 1 bis 8, dadurch gekennzeichnet, daß die beiden Arme (1, 2) konische Vertiefungen (6) zur Aufnahme der beiden Enden der Kapsel (5) aufweisen.

**Claims**

1. A mixer fork for dental mixing capsules comprises a pair of arms (1, 2) for resiliently clamping a capsule (5), wherein one arm (2) is provided with a pin (10) extending substantially parallel to the capsule clamping direction and passing through a hole (11) provided in the other arm (1),

   characterised in that the pin (10) and hole (11) are so dimensioned that the pin (10) is locked in the opening (11) due to a tilting moment generated by the resilient force acting about holding location of the capsule (5).

2. The mixer fork of claim 1, characterised in that the portion of each arm (1, 2) disposed between the holding location of the capsule (5) and the pin (10) or the hole (11) is substantially rigid.

3. The mixer fork of claim 1 or 2, characterised in that the hole (11) is formed in a disc (12) inserted in the other arm (1), the disc (12) having a greater hardness than the pin (10) and being formed with sharp edges.

4. The mixer fork of claim 3, characterised in that the thickness of the disc 12) is substantially smaller than the diameter of the pin (10).

5. The mixer fork of any one of claims 1 to 4, characterised in that the resilient force is provided by a helical spring (13) which is disposed on the pin (10) between a retainer (14) mounted at the free end of the pin (10) and the side of the hole (11) facing away from the one arm (2).

6. The mixer fork of claim 5, characterised in that the pin (10) and spring (13) are disposed within an opening (15) provided in the other arm (1).

7. The mixer fork of any one of claims 1 to 6, characterised in that the one arm (2) carries a handle member (16) on its outer side remote from the other arm (1), permitting a torque counteracting the tilting moment to be exerted by gripping the handle member (16), and that an the other arm (1) has an extension (3) for connection to the mixer drive.

8. The mixer fork of any one of claims 1 to 7, characterised in that the two arms (1, 2) are shaped so that they engage each other at a location (18) laterally offset from the capsule holding location, when no capsule is inserted.

9. The mixer fork of any one of claims 1 to 8, characterised in that both arms (1, 2) have conical recesses (6) for retaining the two ends of the capsule (5).

## Revendications

1. Fourchette de secoueur pour capsules de mélange dentaires équipée de deux bras (1, 2) pour le serrage élastique d'une capsule (5) dans laquelle un bras (2) est muni d'une tige (10), s'étendant sensiblement parallèlement à la direction de serrage de la capsule et traverse une ouverture (12) prévue dans l'autre bras (1),
caractérisée en ce que la tige (10) et l'ouverture (11) sont dimensionnées de sorte que la tige (10) se coince dans l'ouverture (11) en raison d'un moment de basculement créé par la force d'un ressort autour de l'emplacement de serrage de la capsule (5).

2. Fourchette de secoueur selon la revendication 1, caractérisée en ce que la région de chaque bras (1, 2) se trouvant entre l'emplacement de serrage de la capsule (5) et la tige (10) ou l'ouverture (11) est sensiblement rigide.

3. Fourchette de secoueur selon la revendication 1 ou 2, caractérisée en ce que l'ouverture (11) est réalisée dans un disque (12) en un matériau plus dur que la tige (10), disposé dans l'autre bras (1), et est à arêtes vives.

4. Fourchette de secoueur selon la revendication 3, caractérisée en ce que l'épaisseur du disque (12) est sensiblement plus faible que le diamètre de la tige (10).

5. Fourchette de secoueur selon l'une quelconque des revendications 1 à 4, caractérisée en ce que la force de ressort est provoquée par un ressort hélicoïdal (13), qui est disposé sur la tige (10) entre un support (14) prévu sur l'extrémité libre de celle-ci et le côté de l'ouverture (11) éloigné du bras (2).

6. Fourchette de secoueur selon la revendication 5, caractérisée en ce que la tige (10) et le ressort (13) sont disposés dans un évidement (15) pratiqué dans l'autre bras (1).

7. Fourchette de secoueur selon l'une quelconque des revendications 1 à 6, caractérisée en ce qu'un bras (2) porte sur son côté extérieur éloigné de l'autre bras (1) un élément de préhension (16), sur lequel peut s'exercer par saisie un moment de rotation s'opposant au moment de basculement, et en ce que l'autre bras (1) présente un prolongement (3) en vue de la liaison avec le mécanisme d'entraînement du secoueur.

8. Fourchette de secoueur selon l'une quelconque des revendications 1 à 7, caractérisée par une conformation des deux bras (1, 2) de telle sorte qu'ils se touchent en l'absence d'une capsule en un emplacement (18), qui est décalé latéralement de la tige en direction de l'emplacement de serrage de la capsule.

9. Fourchette de secoueur selon l'une quelconque des revendications 1 à 8, caractérisée en ce que les deux bras (1, 2) présentent des cavités coniques (6) en vue de la réception des deux extrémités de la capsule (5).